# EUROPEAN PATENT APPLICATION

(11) **EP 3 349 374 A1**
(43) Date of publication of application: **18.07.2018**
(21) Application number: 17290005.2
(22) Date of filing: 17.01.2017
(51) Int. Cl.: H04B 10/2507, H04B 10/54, H04B 10/69, H04J 14/02

(54) **METHOD FOR COMPENSATING CROSSTALK IN AN OPTICAL COMMUNICATION SYSTEM**

(71) Applicant: Alcatel Lucent, 91620 Nozay (FR)
(72) Inventor: Borkowski, Robert, DE-70435 Stuttgart (DE); Lefevre, Yannick, Antwerpen, 2018 Antwerp (BE); Pfeiffer, Thomas, DE-70435 Stuttgart (DE); Maes, Jochen, Antwerpen, 2018 Antwerp (BE)
(74) Representative: Louis Pöhlau Lohrentz

(57) **Abstract**

The present invention discloses methods for compensating crosstalk in the optical communication system (100, 200). In order to simplify the calculation required for the crosstalk compensation in joint DSP, according to one aspect of the invention, the optical signals from the channel(s) to be compensated and at least part of the channels having crosstalk on those channel(s) shall be modulation phase aligned with respect to the symbols when they are received. In this way, oversampling can be avoided, and the complexity of crosstalk compensation using joint DSP can be reduced. According to another aspect of the invention, the calculation required for the crosstalk compensation in joint DSP is simplified by reducing the number of samples, so that for each symbol to be compensated, the crosstalk compensation module only needs to calculate one sample from each channel having a component in the received signal of the channel to be compensated, even if the signal was oversampled.

## Description

### Field of the invention

The invention relates to communication technology, in particular to crosstalk compensation in an optical communication system.

### Background

In an optical communication system with a plurality of channels sharing the same optical transmission medium, the received signal in one channel may comprise signal components from neighbouring channels which is called crosstalk.

The crosstalk may be introduced in many ways. For example, for a wavelength division multiplexed optical system, crosstalk may be introduced while using wavelength de-multiplexing filters with inferior suppression, particularly in systems employing reduced channel spacing for higher system capacity. The usage of low cost lasers with insufficient tuning accuracy or wavelength stability may also cause crosstalk when improperly aligned with respect to the de-multiplexing filter. The optical system may additionally adopt time division multiplexing scheme.

In order to compensate the crosstalk from neighbouring channels, digital signal processing (DSP) schemes involving joint equalization will be required.

Up to now, no joint DSP equalization schemes were considered for time-and-wavelength division multiplexed (TWDM) optical networks due to the fact that current networks are operated with large channel frequency guard bands, thereby avoiding crosstalk at the expense of system capacity. However, to solve problems that will imminently appear in future networks with narrower channel spacing, such joint DSP functionality has to be considered.

If joint DSP is used to compensate crosstalk, it is required to have one sample of each crosstalk-affected signal at the same time instant, or more specifically which were at the same time in the crosstalk-inducing element. By processing the samples of the same sample time together, one crosstalk-compensated sample of each signal can be reconstructed for that sample time.

In order to achieve the lowest bit error ratio (BER) after crosstalk compensation for each signal, crosstalk-affected samples located in the middle of the respective signal's eye-opening are required. The problem is that for current systems there is no synchronization of the signals, i.e., the eye openings are not aligned. Hence, to achieve the target BER, a plurality of samples per symbol has to be obtained and processed, to ensure that the center of the eye-opening is captured for each signal.

In a most straightforward approach, the joint DSP scheme would be applied to each of the digitized samples at each optical line terminal (OLT) to obtain oversampled, crosstalk-free signals, which would then be demodulated. However, in such an approach, the data that the joint DSP has to process grows linearly with the oversampling rate, so that the oversampling introduces a substantial amount of additional complexity, which makes these solutions less feasible in practice.

Therefore, it is an objective of the present invention to provide a method and corresponding apparatus for compensating crosstalk at the receiving device which has a lower complexity in comparison with the commonly known crosstalk compensation methods which require oversampling of the signals for crosstalk compensation.

### Summary of the Invention

The objective of the invention is achieved by the methods and apparatus in the claims.

According to one aspect of the invention, there is provided a method in a receiving device of an optical communication system, for compensating crosstalk in the optical communication system wherein, the optical communication system comprises a first number of channels, sharing a same optical transmission medium, each channel comprising a far-end transmitter and a corresponding receiver comprised in the receiving device, the first number being an integer no less than 2, and wherein, the far-end transmitter of each channel is configured to transmit an optical signal comprising a sequence of modulated symbols at a predetermined transmission rate to the corresponding receiver in the receiving device, the method comprising steps of: receiving, at the receiver of each channel, a received optical signal comprising a desired signal component of the optical signal from the far-end transmitter of the same channel, wherein, in at least one first channel, the received optical signal further comprises a crosstalk signal component comprising a component of the optical signal from a second group of channel(s), the second group of channel(s) comprising at least one channel that is different from the first channel, the predetermined transmission rate of the first channel and the second group of channel(s) being an integer multiple(s) of a base rate which is a greatest common divisor, GCD, of the transmission rates over the first channel and the second group of channel(s); transforming, the received optical signal of each channel respectively into an electrical analog signal; sampling, at a predetermined sampling rate, the electrical analog signal of each channel respectively based on a predetermined sampling delay, to obtain an initial digital signal for each channel; the predetermined sampling delay being determined based on a metric related to bit error ratio, the predetermined sampling rate being determined as a least common multiple, LCM, of the transmission rates over the first channel and the second group of channel(s); calculating, at least for the first channel, a compensated digital signal corresponding to the desired optical signal, based on a row of a postcoder matrix and the initial digital signals of the first channel and the second group of channel(s); wherein, the method further comprises a step of: transmitting an instruction to the far-end transmitters of the first channel and the second group of channel(s), indicating a modulation phase offset of the respective channel, causing the far-end transmitters of the first channel and the second group of channel(s) to adjust their modulation phase of the optical signal respectively by a shift of a fraction of a symbol length, so that the optical signals from them are modulation phase aligned with respect to the symbols when they are received.

In a preferred embodiment, the predetermined transmission rates of the first channel and the second group of channel(s) are the same.

In a preferred embodiment, the predetermined sampling delay is respectively determined for different channels based on the metric related to bit error ratio of the respective channel; and in the step of sampling, the electrical analog signal of each channel is sampled respectively based on the predetermined sampling delay determined for the respective channel.

In a preferred embodiment, the optical communication system (100) is a wavelength division multiplexed or a time-and-wavelength division multiplexed optical network, and the optical communication system (100) further comprises a multiplexer and a demultiplexer, configured to enable a transmission of the optical signals of the first number of channels over a same transmission medium.

In a preferred embodiment, the method further comprises a step of determining the modulation phase offset of the first channel and the second group of channel(s) based on the metric related to bit error ratio of the respective channel.

In a preferred embodiment, the metric is at least one of: bit error ratio, eye opening on an eye diagram, or extinction ratio.

In a preferred embodiment, the received optical signal in the at least one first channel further comprises a crosstalk signal component comprising a component of the optical signal from a third group of channel(s), the third group of channel(s) comprising at least one channel that is different from the first channel and the second group of channels, in the step of calculating, the compensated digital signal corresponding to the desired optical signal of the first channel is calculated based on the initial digital signals of the third group of channel(s) as well.

According to another aspect of the invention, there is provided amethod, in a far-end transmitter of an optical communication system, for compensating crosstalk in the optical communication system, wherein, the optical communication system comprises a first number of channels sharing a same optical transmission medium, each channel comprising a far-end transmitter and a corresponding receiver comprised in a receiving device, the first number being an integer no less than 2, and wherein, the far-end transmitter of each channel is configured to transmit an optical signal comprising a sequence of modulated symbols at a predetermined transmission rate to the corresponding receiver in the receiving device; the method comprising steps of: receiving, an instruction from the receiving device indicating a modulation phase offset for the optical signal transmitted by the far-end transmitter; adjusting, the modulation phase of the optical signal by a shift of a fraction of a symbol length according to the modulation phase offset.

According to one aspect of the invention, there is provided a method, in a receiving device of an optical communication system, for compensating crosstalk in the optical communication system, wherein, the optical communication system comprises a first number of channels, sharing a same optical transmission medium, each channel comprising a far-end transmitter and a corresponding receiver comprised in the receiving device, the first number being an integer no less than 2, and wherein, the far-end transmitter of each channel is configured to transmit an optical signal comprising a sequence of modulated symbols at a predetermined transmission rate to the corresponding receiver in the receiving device, the method comprising steps of: receiving, at the receiver of each channel, a received optical signal comprising a desired signal component of the optical signal from the far-end transmitter of the same channel, wherein, in at least one first channel, the received optical signal further comprises a crosstalk signal component comprising a component of the optical signal from a second group of channel(s), the second group of channel(s) comprising at least one channel that is different from the first channel; transforming, the received optical signal of each channel respectively into an electrical analog signal; sampling, at a predetermined sampling rate, the electrical analog signal of each channel respectively based on a predetermined sampling delay, to obtain an initial digital signal for each channel; the predetermined sampling delay being determined based on a metric related to bit error ratio, the predetermined sampling rate being determined as at least twice of the transmission rate of the first channel; determining, at least for the first channel, a decimation offset, based on the metric related to bit error ratio of the first channel; selecting, from the initial digital signal of the first channel and the second group of channel(s), respectively a decimated digital signal comprising only one sample per time interval, according to the decimation offset of the first channel, wherein, the time interval is a time duration of one symbol in the first channel; calculating, at least for the first channel, a compensated digital signal corresponding to the desired optical signal, based on a row of the postcoder matrix and the decimated digital signals of the first channel and the second group of channels.

In a preferred embodiment, the predetermined transmission rates of the first channel and the second group of channel(s) are the same.

In a preferred embodiment, the predetermined transmission rate of the first channel and the second group of channel(s) being an integer multiple(s) of a base rate which is a greatest common divisor, GCD, of the transmission rates over the first channel and the second group of channel(s); the method further comprising a step of: transmitting an instruction to the far-end transmitters of the first channel and the second group of channel(s), indicating a modulation phase offset of the respective channel, causing the far-end transmitters of the first channel and the second group of channel(s) to adjust their modulation phase of the optical signal respectively by a shift of a fraction of a symbol length, so that the optical signals from them are modulation phase aligned with respect to the symbols when they are received.

In a preferred embodiment, the predetermined sampling delay is respectively determined for different channels based on the metric related to bit error ratio of the respective channel, and in the step of sampling, the electrical analog signal of each channel is sampled respectively based on the predetermined sampling delay determined for the respective channel.

According to another,aspect of the invention, there is provided a receiving device of an optical communication system, comprising a first number of receivers, wherein, the optical communication system comprises the first number of channels, sharing a same optical transmission medium, each channel comprising a far-end transmitter and a corresponding receiver comprised in the receiving device, the first number being an integer no less than 2, and wherein, the far-end transmitter of each channel is configured to transmit an optical signal comprising a sequence of modulated symbols at a predetermined transmission rate to the corresponding receiver in the receiving device, the receiver of each channel being configured to receive a received optical signal comprising a desired signal component of the optical signal from the far-end transmitter of the same channel, wherein, in at least one first channel, the received optical signal further comprises a crosstalk signal component comprising a component of the optical signal from a second group of channel(s), the second group of channel(s) comprising at least one channel that is different from the first channel, the predetermined transmission rate of the first channel and the second group of channel(s) being an integer multiple(s) of a base rate which is a greatest common divisor, GCD, of the transmission rates over the first channel and the second group of channel(s), the receiver of each channel further being configured to transform the received optical signal of each channel respectively into an electrical analog signal; the receiving device further comprising: a sampling module for each channel, configured to sample, at a predetermined sampling rate, the electrical analog signal of each channel respectively based on a predetermined sampling delay, to obtain an initial digital signal for each channel; the predetermined sampling delay being determined based on a metric related to bit error ratio, the predetermined sampling rate being determined as a least common multiple, LCM, of the transmission rates over the first channel and the second group of channel(s); a crosstalk compensation module, configured to calculate, at least for the first channel, a compensated digital signal corresponding to the desired optical signal, based on a row of a postcoder matrix and the initial digital signals of the first channel and the second group of channel(s); the receiving device further comprising: a transmitting module for each channel, configured to transmit an instruction to the far-end transmitters of the first channel and the second group of channel(s), indicating a modulation phase offset of the respective channel, causing the far-end transmitters of the first channel and the second group of channel(s) to adjust their modulation phase of the optical signal respectively by a shift of a fraction of a symbol length, so that the optical signals from them are modulation phase aligned with respect to the symbols when they are received.

According to another aspect of the invention, there is provided a far-end transmitter of an optical communication system, wherein, the optical communication system (100) comprises a first number of channels sharing a same optical transmission medium, each channel comprising a far-end transmitter and a corresponding receiver comprised in a receiving device, the first number being an integer no less than 2, and wherein, the far-end transmitter of each channel is configured to transmit an optical signal comprising a sequence of modulated symbols at a predetermined transmission rate to the corresponding receiver in the receiving device, the far-end transmitter comprising: a receiving module, configured to receive an instruction from the receiving device indicating a modulation phase offset for the optical signal transmitted by the far-end transmitter; an adjusting module, configured to adjust the modulation phase of the optical signal by a shift of a fraction of a symbol length according to the modulation phase offset.

According to another aspect of the invention, there is provided a receiving device of an optical communication system, comprising a first number of receivers, wherein, the optical communication system comprises the first number of channels, sharing a same optical transmission medium, each channel comprising a far-end transmitter and a corresponding receiver comprised in the receiving device, the first number being an integer no less than 2, and wherein, the far-end transmitter of each channel is configured to transmit an optical signal comprising a sequence of modulated symbols at a predetermined transmission rate to the corresponding receiver in the receiving device, the receiver of each channel being configured to receive a received optical signal comprising a desired signal component of the optical signal from the far-end transmitter of the same channel, wherein, in at least one first channel, the received optical signal further comprises a crosstalk signal component comprising a component of the optical signal from a second group of channel(s), the second group of channel(s) comprising at least one channel that is different from the first channel, the receiver of each channel further being configured to transform the received optical signal of each channel respectively into an electrical analog signal; the receiving device further comprising: a sampling module for each channel, configured to sample, at a predetermined sampling rate, the electrical analog signal of each channel respectively based on a predetermined sampling delay, to obtain an initial digital signal for each channel; the predetermined sampling delay being determined based on a metric related to bit error ratio, the predetermined sampling rate being determined as at least twice of the transmission rate of the first channel; at least one decimation offset determining module for the first channel, configured to determine a decimation offset, based on the metric related to bit error ratio of the first channel; a decimation module for each of the first channel and the second group of channel(s), configured to select from the initial digital signal of the first channel and the second group of channel(s), respectively a decimated digital signal comprising only one sample per time interval, according to the decimation offset of the first channel, wherein, the time interval is a time duration of one symbol in the first channel; at least one crosstalk compensation module, configured to calculate a compensated digital signal corresponding to the desired optical signal for the first channel, based on a row of the postcoder matrix and the decimated digital signals of the first channel and the second group of channels.

According to the invention, crosstalk compensation schemes for systems with no oversampling are enabled, and the complexity of crosstalk compensation schemes for systems with oversampling is reduced. According to the invention, low-complexity crosstalk compensation is achieved by reducing high oversampling requirements by pre-aligning the received signals and/or by reducing DSP complexity for systems with oversampling where phase alignment does not have to be enforced.

### Brief description of the figures

The features and advantages of the invention will be more completely understood by appreciating the following detailed description of preferred embodiments with reference to the figures, wherein
- Fig. 1: depicts a schematic block diagram illustrating an optical communication system 100 according to a first embodiment of the invention;
- Fig. 2: depicts a schematic block diagram illustrating an optical communication system 200 according to a second embodiment of the invention;
- Fig. 3: depicts a schematic block diagram illustrating part of the receiving device 201 according to the second embodiment of the invention;
- Fig. 4: depicts a schematic block diagram illustrating part of the receiving device 201 according to a third embodiment of the invention.

### Detailed description

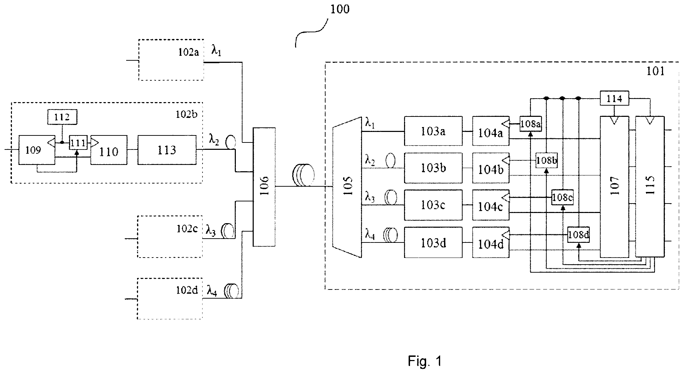

Figure 1 shows a schematic block diagram illustrating an optical communication system 100 according to a first embodiment of the invention.

In the embodiment shown in Fig. 1, the optical communication system 100 comprises four channels sharing the same optical transmission medium, for example the fiber.

The skilled person should understand, the number of channels can be any integer no less than 2, and shall not be limited to the given example.

Each channel comprises a far-end transmitter and a corresponding receiver. The far-end transmitter of each channel is configured to transmit an optical signal comprising a sequence of modulated symbols at a predetermined transmission rate to the corresponding receiver. The symbols may be modulated according to any intensity related modulation method. In the following, embodiments of the present invention will be described assuming an on-off keying modulation method is adopted. The modulated symbols are represented by different intensity levels of light. The skilled person shall understand that the modulation method is not limited to the given example, and any single carrier modulation method can be adopted in the present invention.

In Fig. 1, the far-end transmitters of each channel are optical network units (ONU) 102a, 102b, 102c and 102d. The corresponding receivers of each channel are OLT channel terminations (CT) 103a, 103b, 103c and 103d comprised in the receiving device 101. The receivers 103a, 103b, 103c, 103d may be physically collocated or distributed.

In the embodiment described with reference to Fig. 1, the optical communication system 100 is a wavelength division multiplexed optical network. The optical communication system 100 further comprises a multiplexer 106 and a de-multiplexer 105, configured to enable a transmission of the optical signals of different channels over the same transmission medium.

Specifically, in Fig. 1, in a first channel, a first far-end transmitter 102a is configured to transmit a first optical signal to a first receiver 103a using a first wavelength λ₁. In a second channel, a second far-end transmitter 102b is configured to transmit a second optical signal to a second receiver 103b using a second wavelength λ₂. In a third channel, a third far-end transmitter 102c is configured to transmit a third optical signal to a third receiver 103c using a third wavelength λ₃. In a fourth channel, a fourth far-end transmitter 102d is configured to transmit a fourth optical signal to a fourth receiver 103d using a fourth wavelength λ₄.

In Fig. 1, the multiplexer 106 may be a wavelength multiplexer. The skilled person shall understand, the multiplexer 106 is not limited to wavelength multiplexer Instead, the multiplexer 106 is configured to combine different optical signals on different channels so that those signals can be transmitted over the same optical medium. In an embodiment of the invention, the multiplexer 106 may be a single module, for example an optical coupler. In another embodiment of the invention, the (de-)multiplexing functionality does not necessarily have to be performed by a single module. It could also be done in a distributed fashion, i.e., using for instance multiple modules at different locations.

In Fig. 1, the optical signals transmitted by the respective far-end transmitter 102a, 102b, 102c and 102d are combined together by the multiplexer 106 after going through the distribution network. The multiplexed optical signal arrives at the de-multiplexer 105 after going through the feeder network which may be passive or may incorporate active elements.

In Fig. 1, the de-multiplexer 105 may be a wavelength de-multiplexer. The skilled person shall understand, the de-multiplexer 105 is not limited to wavelength multiplexer. Instead, the de-multiplexer 105 shall be cooperating with the multiplexer 106 and being able to recover different optical signals combined in the received optical signal. De-mulitplexer 105 may also be an arrayed waveguide grating (AWG)-based de-multiplexer.

Theoretically in the embodiment described with reference to Fig. 1, the de-multiplexer 105 recovers the first optical signal carried on the first wavelength λ₁ to the first port of the de-multiplexer 105, the second optical signal carried on the second wavelength λ₂ to the second port of the de-multiplexer 105, the third optical signal carried on the third wavelength λ₃ to the third port of the de-multiplexer 105, and the fourth optical signal carried on the fourth wavelength λ₄ to the fourth port of the de-multiplexer 105. The first receiver 103a, the second receiver 103b, the third receiver 103c and the fourth receiver 103d are respectively coupled to the ports 1-4 of the de-multiplexer 105. Ideally, the optical signal received at the respective receiver 103a to 103d shall only contain the signal transmitted from the corresponding far-end transmitter.

However, due to the non-ideallity of the de-multiplexer 105, the optical signals on each output of the demultiplexer 105 may comprise signal components from more than one channel. Therefore, the optical signal received at each receiver may comprise not only the desired signal component of the optical signal from the far-end transmitter of the same channel, but also the crosstalk signal component comprising component(s) of the optical signal from other channel(s).

In the following, exemplary embodiments of the invention will be described with reference to Fig.1. In one exemplary embodiment, in the first channel, the received optical signal comprises a desired signal component of the first optical signal from the far-end transmitter 102a and a crosstalk signal component comprising a component of the optical signal from a second group of channel(s). In one exemplary embodiment, the second group of channel comprises the second channel. In another exemplary embodiment, the second group of channels comprises the second channel, the third channel and the fourth channel. The skilled person shall understand, the second group of channel is not limited to the given examples, but shall comprise at least one channel that is different from the first channel.

Although the above embodiments have been described with respect to a wavelength division multiplexed optical network. The skilled person should understand that the optical communication system 100 may also be a time-and-wavelength division multiplexed optical network. The skilled person shall also understand, the de-multiplexer 105 is not the only reason for the crosstalk. Crosstalk can be introduced by other components present in the optical path.

The present invention aims to compensate the power crosstalk in the received signal in the upstream direction, i.e. transmitted from the ONU to the OLT-CT.

In order to simplify the calculation required for the crosstalk compensation in the joint DSP, according to one aspect of the invention, the optical signals from the far-end transmitters shall be modulation phase aligned with respect to the symbols when they are received. Specifically, the optical signals of the channel(s) to be compensated and at least part of the channels having crosstalk on those channel(s) shall be modulation phase aligned. In this way, oversampling can be avoided, and the complexity of crosstalk compensation using joint DSP can be reduced.

In the following, for the sake of simplicity, the embodiments of the present invention will be described assuming only one channel (i.e. the first channel in Fig. 1) has crosstalk from the second group of channels. The skilled person shall understand that it is also possible to have more than one channel affected by crosstalk, or even all the channels are mutually affected by crosstalk. The present invention can be easily adapted to compensate crosstalk in more than one channel.

In order to achieve modulation phase alignment, a modulation phase offset determining module (not shown) comprised in the receiving device 101 is configured to determining the modulation phase offset of the first channel and the second group of channel(s) based on the metric related to bit error ratio of the respective channel for example, eye opening on an eye diagram, or extinction ratio. The determination of the modulation phase offset will be explained later.

If the transmission rates of different channels are the same, the modulation phase alignment mentioned in the present application refers to a status that when the optical signals are received at one of the receivers, the modulation phase of different signals are the same at that receiver with respect to the same reference time point.

If the transmission rates of the first channel and of each channel belonging to the second group of channels are integer multiples of a base rate which is a greatest common divisor (GCD) of the transmission rates over the first channel and the channels belonging to the second group of channel(s), assuming there is a virtual channel transmitting at the base rate, the first channel and each channel belonging to the second group of channels are considered to be modulation phase aligned in the present application when each channel's modulation phase is equal to an integer multiple of the modulation phase of the virtual channel at one of the receivers with respect to the same reference time point, where said integer is equal to the ratio of the channel's transmission rate to the base rate. The transmission rates of different channels may be quantified in symbol rate in the present application.

In Fig. 1, in the receiving device 101 of the optical communication system 100, optical signals are received at the receivers 103a, 103b, 103c, 103d respectively and then transformed into electrical analog signals.

In one embodiment, the receivers 103a to 103d are optic-electric converters which convert optical signals into electrical analog signals. Specifically, the receivers may be envelope detectors. The intensity modulated symbols received by the receivers are converted to electrical current, and then voltage in a photo detection process. Once the received optical signal is transformed into an electrical analog signal, the crosstalk component can not be separated from received signal. Therefore, the electrical analog signal obtained after the optical-electrical transformation is crosstalk-affected.

The sampling modules 104a, 104b, 104c, 104d are configured to sample electrical analog signal of each channel respectively at the same predetermined sampling rate and based on a predetermined sampling delay 108a, 108b, 108c, 108d.

The predetermined sampling rate and the predetermined sampling delay 108a, 108b, 108c, 108d can be determined by the sampling control module 115.

The sampling delay 108a, 108b, 108c, 108d is applied to the respective sampling module 104a, 104b, 104c, 104d, so that the crosstalk-affected electrical analog signal can be sampled in the middle of the eye opening on the eye diagram respectively in each channel, instead of on the edge.

In the following, the determination of the modulation phase offset and the sampling delay will be described.

The initial modulation phase offset of each channel is determined during an initialization procedure. In the initialization procedure, training sequence comprising fixed combination of symbols is transmitted from a randomly selected ONU, for example ONU 102a, in sequence to each of the OLT-CT. A metric related to bit error ratio is evaluated at the receiving device 101. In an exemplary embodiment, the extinction ratio is evaluated. The sampling delay 108a, 108b, 108 and 108d for each of the OLT-CT is respectively adjusted to achieve maximum extinction ratio, measured from the samples of the digital signal in that OLT-CT.

The predetermined sampling delay 108a, 108b, 108c, 108d may be different for each channel, so as to compensate the misalignment of symbols caused in the channel attachment section (i.e. optical paths from the de-multiplexer 105 to each of the receivers 103a to 103d).

However, if the optical paths in the channel attachment section have the same length, the transmission time in the channel attachment section of each channel may be considered to be the same. In that case, all the channels share the same sampling delay 108a, 108b, 108 and 108d.

After the sampling delay has been determined for all the OLT-CTs using one ONU, the modulation phase offset of the remaining ONUs will be sequentially adjusted to achieve maximum extinction ratio measured from the samples of the digital signal in the respective OLT-CTs.

During showtime, i.e. when there is actually data being transmitted, a tracking mechanism can be implemented to adjust the modulation phase offset gradually. Specifically, modulation phase offset of the ONU can be continuously dithered around the last best value with a small disturbance that does not result in significant BER degradation, in order to find the new best value that minimizes the BER. In an embodiment, the modulation phase can be dithered in shift of 1/8 of the symbol length (=2π/8 rad modulation phase offset).

The adjustment of the modulation phase offset during showtime makes it possible to compensate for a slow drift of the modulation phase due to fiber transit time along the optical path caused by e.g., temperature variations or mechanical stress.

After the receiving device 101 determines the modulation phase offset of the first channel and the second group of channel(s), the receiving device 101 will transmit via a transmitting module (not shown) the determined modulation phase offset to the respective far-end transmitters 102a, 102b, 102c, 102d. The transmission of the determined modulation phase offset can be realized over the same optical network in the downstream (opposite) direction.

The far-end transmitters of the first channel and the second group of channel(s) receive an instruction from the receiving device 101 indicating the modulation phase offset for the optical signal transmitted by the respective far-end transmitter. Then the far-end transmitters 102a, 102b, 102c, 102d adjust their modulation phase of the optical signal respectively by a shift of a fraction of a symbol length according to the received modulation phase offset, so that the optical signals that they are transmitting become modulation phase aligned with respect to the symbols when they are received.

Specifically, in the embodiment applying on-off keying modulation method, the modulation phase offset adjustment at the far-end transmitter side is implemented with a delay flip-flop 110 (D flip flop) whose clock 112 phase can be varied with an electronic phase shift element 111. In the following, the operation in the far-end transmitter will be described with respect to an exemplary far-end transmitter ONU 102b.

The ONU 102b comprises an ONU MAC module 109 (MAC = Media Access Control), a D flip flop 110, an electronic phase shift element 111, a clock 112 and an ONU transmitter 113. The ONU MAC module 109 is configured to provide data that shall be transmitted. The clock 112 is configured to provide time basis for different modules in the ONU 102b. The D flip flop 110 is configured to delay the data provided by the ONU MAC module 109 according to the modulation phase offset received from the receiving device 101. The phase shift element 111 might be implemented as an electronic phase shifter which causes constant phase shift across all frequencies, so that the phase shifter works without introducing distortions only for single frequency signals, i.e. clocks. The ONU transmitter 113 is configured to originate the carrier wave λ₂ and modulate the data delayed by the D flip flop 110 onto the optical carrier wave λ₂.

Specifically, the D flip flop 110 has a data input (the lower input at the left side of D flip flop 110 in figure 1), and a triggering input (at the upper input on the left side).

The ONU MAC module 109 provides data to the D flip flop 110 on its data input. The triggering input of the D flip flop 110 receives clock 112 after it is delayed by the phase shift element 111. The D flip flop acts as a buffer, and the phase delayed clock 112 applied to this flip-flop 110 is used to adjust the phase of the signal at the output of this buffer. The data at the output of the D flip flop 110 are intensity modulated on the optical carrier wave having wavelength λ₂ by the ONU transmitter 113. In this way, the modulation of the data onto the optical carrier wave is delayed by an amount determined by the delay Δt caused by the phase shift element 111. Further, the delay Δt caused by the phase shift element 111 can be adjusted according to the modulation phase offset received from the receiving device 101.

The predetermined sampling rate is determined based on the transmission rate of the channel that shall be compensated and on the transmission rates of at least part of the channels having crosstalk on the channel that shall be compensated. The predetermined transmission rate of the first channel and the second group of channels are respectively an integer multiple(s) of a base rate which is a greatest common divisor (GCD) of the transmission rates over the first channel and the second group of channel(s). The predetermined sampling rate is determined as a least common multiple, LCM, of the transmission rates over the first channel and the second group of channel(s).

In one embodiment, the second group of channels comprises the second channel in Fig.1. If the transmission rate of the first channel is 10 Gsymbol/s the transmission rate of the second channel is 20 Gsymbol/s, the sampling rate is determined as 20 Gsamples/s. After sampling, the initial digital signal in the first channel comprises 2 samples/symbol, and the initial digital signal in the second channel comprises 1 sample/symbol.

In another embodiment, the received optical signal in the first channel further comprises a crosstalk signal component comprising a component of the optical signal from a third group of channel(s), the third group of channel(s) comprising at least one channel that is different from the first channel and the second group of channels. Assuming the third group of channel comprises the third channel in Fig. 1. The transmission rate of the first channel is 10 Gsymbol/s, the transmission rate of the second channel is 20 Gsymbol/s, and the transmission rate on the third channel is arbitrary. The sampling rate can still be determined as 20 Gsamples/s.

In a preferred embodiment, the predetermined transmission rates of the first channel and the second group of channel(s) are the same. In that case, the sampling rate can be determined as the same rate. The initial digital signals in the first channel and the second group of channel(s) comprise 1 sample/symbol.

The initial digital signals are then forwarded to the crosstalk compensation module 107 coupled to each of the sampling module 104a, 104b, 104c, 104d. The crosstalk compensation module 107 calculates the compensated digital signal corresponding to the desired optical signal in the first channel based on a row of a postcoder matrix and the initial digital signals of the first channel and the second group of channel(s).

Specifically, the crosstalk can be compensated by calculating the dot product between the vector composed of the initial digital signals of the first channel and the second group of channel(s) and a respective row of a postcoder matrix.

The skilled person shall understand the postcoder matrix can be determined according any known method or any method for determining the postcoder matrix developed in the future.

The skilled person shall also understand, if the initial digital signal comprises more than 1 sample/ symbol, the crosstalk compensated signal shall also comprise more than 1 sample/ symbol. Therefore, before being demodulated, the crosstalk compensated signal shall be decimated so that only 1 sample/ symbol is demodulated.

According to the second aspect of the present invention, another idea to simplify the calculations required for the crosstalk compensation in the joint DSP is to reduce the number of samples, so that for each symbol to be compensated, the crosstalk compensation module only needs to calculate one sample from each channel having a component in the received signal of the channel to be compensated, even if the signal was oversampled.

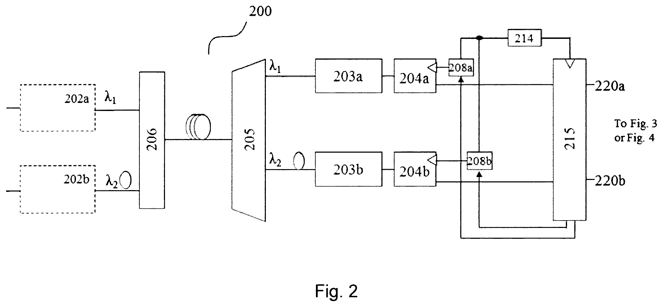

In the following, embodiments according to the second aspect of the present invention will be described with respect to Figs 2-4.

Fig. 2 shows a schematic block diagram illustrating an optical communication system 200 according to the second embodiment of the invention. In Fig. 2, the optical communication system 200 has similar structure as the optical communication system 100 in Fig.1. One difference is that in Fig. 2, the optical communication system 200 comprises only 2 channels for simplicity. The skilled person shall understand that in the optical communication system 200, the number of channels can also be any integer no less than 2, and shall not be limited to the given example.

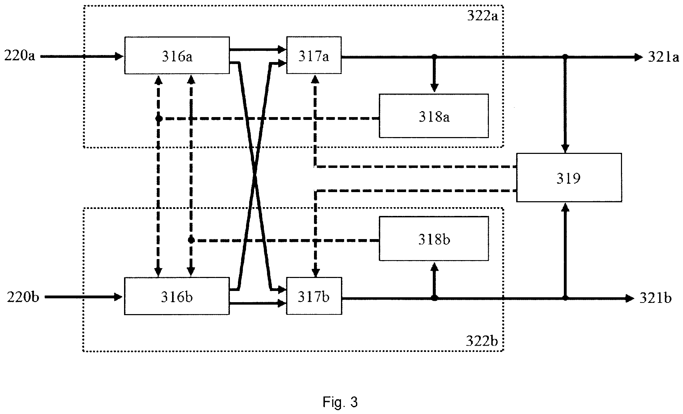

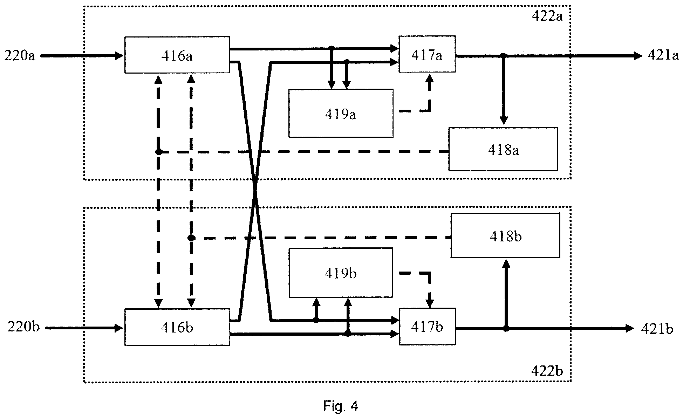

Another difference is that in Fig. 2 the crosstalk compensation module is not shown, the signals obtained at 220a and 220b are not yet compensated, they are going to be further processed in Fig. 3 or Fig. 4. The receiving device 201 according the second aspect of the invention comprises not only the receiver 203a, 203b, the sampling module 204a, 204b, sampling control module 215, but also the decimation module 316a, 316b, the crosstalk compensation module 317a, 317b, the decimation offset determining module 318a, 318b and the postcoder calculation module 319 in Fig. 3, or the decimation module 416a, 416b, the crosstalk compensation module 417a, 417b, the decimation offset determining module 418a, 418b and the postcoder calculation module 419a, 419b in Fig. 4.

In Figs. 1 and 2, similar reference signs represent the similar components. Specific description of those components that have the same function as in Fig. 1 will not be described here. Only components having different function as in Fig. 1 will be described.

In the following, for the sake of simplicity, the embodiments of the present invention will be described with reference to Fig.2 assuming only the first channel has crosstalk from second channel, and only the first channel shall be compensated. The skilled person shall understand that the first channel may have crosstalk from more than one other channel, and it is also possible to have more than one channel affected by crosstalk.

In Fig. 2, the sampling modules 204a and 204b are configured to sample at a predetermined sampling rate, the electrical analog signal of each channel respectively based on a predetermined sampling delay 208a, 208b.

The predetermined sampling rate and the predetermined sampling delay 208a, 208b, can be determined by the sampling control module 215.

The predetermined sampling delays 208a, 208b can be determined similar as the sampling delays 108a, 108b, 108 and 108d described with respect to Fig. 1.

Similarly, the predetermined sampling delays 208a, 208b can be the same or different.

However, the predetermined sampling rate in the embodiment described with respect of Fig. 2 is determined as at least twice of the transmission rate of the first channel. The transmission rate on each channel can be any possible transmission rate.

In one embodiment, if only the first channel shall be compensated, and suppose the transmission rate of the first channel is 10 Gsymbol/s, and the transmission rate of the second channel is 15 Gsymbol/s, the sampling rate is determined as at least 2*10=20 Gsamples/s. After sampling, in a given time interval which is defined as a time duration of one symbol in the first channel, the initial digital signal in the first channel 220a and the second channel 220b both comprise 2 samples respectively.

If both the first channel and the second channel shall be compensated, the sampling rate is determined as at least twice of the maximum transmission rate on the channels that shall be compensated. Still, if the transmission rate of the first channel is 10 Gsymbol/s, and the transmission rate of the second channel is 15 Gsymbol/s, the sampling rate is determined as at least 2*max(10, 15)=2*15=30 Gsamples/s. After sampling, in a given time interval which is defined as a time duration of one symbol in the first channel, the initial digital signal in the first channel 220a and the second channel 220b both comprise 3 samples respectively. In a given time interval which is defined as a time duration of one symbol in the second channel, the initial digital signal in the first channel 220a and the second channel 220b both comprise 2 samples respectively.

The number of samples per time interval doesn't have to be an integer. In one embodiment, after sampling, the initial digital signal in the second channel 220b comprises a second number of samples per time interval. The second number is a non-integer greater than 2. By interpolation, a digital signal comprising a third number of samples per time interval can be determined based on the second number of samples per time interval. The third number is an integer that the second number is rounded to an integer, preferably a nearest smaller or larger power of 2 of the second number.

After sampling, the initial digital signal in the first channel 220a and the initial digital signal in the second channel 220b are further processed in Fig. 3 or Fig. 4.

In the following, an embodiment will be described with respect to Fig. 3 assuming only the first channel in Fig. 2 shall be compensated.

Fig. 3 shows a schematic block diagram illustrating part of the receiving device 201 according to the second embodiment of the invention. In Fig. 3, in the decimation block of the first channel 322a, the decimation module 316a selects a decimated digital signal comprising only one sample per symbol from the initial digital signal of the first channel 220a, according to the decimation offset of the first channel determined by the decimation offset determining module 318a. In the decimation block of the second channel 322b, the decimation module 316b selects a decimated digital signal comprising only one sample per time interval from the initial digital signal of the second channel 220b, according to the decimation offset of the first channel. The time interval is a time duration of one symbol in the first channel.

The decimation offset determining module 318a in the decimation block of the first channel 322a determines the decimation offset of the first channel based on the metric related to bit error ratio of the first channel.

The crosstalk compensation module 317a calculates a compensated digital signal 321 a corresponding to the desired optical signal for the first channel, based on a row of the postcoder matrix and the decimated digital signals of the first channel and the second channel selected according to the decimation offset of the first channel.

If the second channel shall be compensated as well, the decimation offset determining, module 318b in the decimation block of the second channel 322b determines the decimation offset of the second channel based on the metric related to bit error ratio of the second channel. Then the decimation modules 316a and 316b select respectively from the initial digital signal 220a and 220b, a decimated digital signal comprising only one sample per time interval according to the decimation offset of the second channel, wherein, the time interval is a time duration of one symbol in the second channel. The crosstalk compensation module 317b calculates a compensated digital signal 321 b corresponding to the desired optical signal for the second channel, based on a row of the postcoder matrix and the decimated digital signals of the first channel and the second channel selected according to the decimation offset of the second channel.

In the postcoder calculation module 319, postcoder matrix may be calculated based on the compensated digital signals 321a and 321b according to any known method or other method developed in the future.

The embodiment described with respect to Fig. 2 can be combined together with the embodiment described with respect to Fig. 1. That means the signals received at the receiver 203a, 203b can also be modulation phase aligned. In one embodiment, the receiving device 201 further comprises a transmitting module, configured to transmit an instruction to the far-end transmitters 202a, 202b indicating a modulation phase offset of the respective channel, causing the far-end transmitters 202a, 202b to adjust their modulation phase of the optical signal respectively by a shift of a fraction of a symbol length, so that the optical signals from them are modulation phase aligned with respect to the symbols when they are received. In one embodiment, the receiving device 201 further comprises a determining module (not shown) configured to determine the modulation phase offset of the the far-end transmitters 202a, 202b based on the metric related to bit error ratio of the respective channel.

Fig. 4 depicts a schematic block diagram illustrating part of the receiving device 201 according to a third embodiment of the invention. In Figs. 3 and 4, similar reference signs represent the similar components. Specific description of those components that have the same function as in Fig. 3 will not be described here. Only components having different function as in Fig. 3 will be described.

In the postcoder calculation module 419a, the row of a postcoder matrix corresponding to the first channel may be calculated based on the decimated digital signals of the first channel and the second channel selected according to the decimation offset of the first channel according to any known method or other method developed in the future. In the postcoder calculation module 419b, the row of a postcoder matrix corresponding to the second channel may be calculated based on the decimated digital signals of the first channel and the second channel selected according to the decimation offset of the second channel according to any known method or other method developed in the future.

The embodiment described with respect to the second aspect of the present invention can be combined with the embodiment according to the first aspect of the present invention.

In that case the predetermined transmission rate of the first channel and the second group of channel(s) shall be limited to an integer multiple(s) of a base rate which is a greatest common divisor, GCD, of the transmission rates over the first channel and the second group of channel(s). Similar to the first embodiment, the optical signals of the channel(s) to be compensated and at least part of the channels having crosstalk on those channel(s) shall be modulation phase aligned when they are received.

The receiving device 201 transmits an instruction to the far-end transmitters of the first channel and the second group of channel(s), indicating a modulation phase offset of the respective channel. The far-end transmitters of the first channel and the second group of channel(s) then adjust their modulation phase of the optical signal respectively by a shift of a fraction of a symbol length according to the received modulation phase offset, so that the optical signals from them are modulation phase aligned with respect to the symbols when they are received.

For TWDM systems that have a low oversampling rate (close to 1 Sample/symbol), the modulation phase alignment proposed by the present invention is sufficient to realize the low-complexity cross-talk cancellation. In contrast, for systems with a very high sampling rate (≥4 Samples/symbol), the decimation of samples proposed by the present invention is sufficient, as no phase alignment is necessary for the crosstalk mitigation. For systems with sampling rates in between, both parts of the invention would be beneficial to reduce the complexity of the joint DSP.

## Claims

1. A method, in a receiving device (101) of an optical communication system (100), for compensating crosstalk in the optical communication system (100),
wherein, the optical communication system (100) comprises a first number of channels, sharing a same optical transmission medium, each channel comprising a far-end transmitter (102a, 102b, 102c, 102d) and a corresponding receiver (103a, 103b, 103c, 103d) comprised in the receiving device (101), the first number being an integer no less than 2,
and wherein, the far-end transmitter (102a, 102b, 102c, 102d) of each channel is configured to transmit an optical signal comprising a sequence of modulated symbols at a predetermined transmission rate to the corresponding receiver (103a, 103b, 103c, 103d) in the receiving device (101),
the method comprising steps of:
receiving, at the receiver (103a, 103b, 103c, 103d) of each channel, a received optical signal comprising a desired signal component of the optical signal from the far-end transmitter (102a, 102b, 102c, 102d) of the same channel, wherein, in at least one first channel, the received optical signal further comprises a crosstalk signal component comprising a component of the optical signal from a second group of channel(s), the second group of channel(s) comprising at least one channel that is different from the first channel, the predetermined transmission rate of the first channel and the second group of channel(s) being an integer multiple(s) of a base rate which is a greatest common divisor, GCD, of the transmission rates over the first channel and the second group of channel(s);
transforming, the received optical signal of each channel respectively into an electrical analog signal;
sampling, at a predetermined sampling rate, the electrical analog signal of each channel respectively based on a predetermined sampling delay (108a, 108b, 108c, 108d), to obtain an initial digital signal for each channel; the predetermined sampling delay (108a, 108b, 108c, 108d) being determined based on a metric related to bit error ratio, the predetermined sampling rate being determined as a least common multiple, LCM, of the transmission rates over the first channel and the second group of channel(s),
calculating, at least for the first channel, a compensated digital signal corresponding to the desired optical signal, based on a row of a postcoder matrix and the initial digital signals of the first channel and the second group of channel(s);
wherein, the method further comprises a step of:
transmitting an instruction to the far-end transmitters (102a, 102b, 102c, 102d) of the first channel and the second group of channel(s), indicating a modulation phase offset of the respective channel, causing the far-end transmitters (102a, 102b, 102c, 102d) of the first channel and the second group of channel(s) to adjust their modulation phase of the optical signal respectively by a shift of a fraction of a symbol length, so that the optical signals from them are modulation phase aligned with respect to the symbols when they are received.

2. A method according to claim 1, wherein, the predetermined transmission rates of the first channel and the second group of channel(s) are the same.

3. A method according to claim 1, wherein,
the predetermined sampling delay is respectively determined for different channels based on the metric related to bit error ratio of the respective channel;
and in the step of sampling, the electrical analog signal of each channel is sampled respectively based on the predetermined sampling delay determined for the respective channel.

4. A method according to claim 1, wherein, the optical communication system (100) is a wavelength division multiplexed or a time-and-wavelength division multiplexed optical network, and the optical communication system (100) further comprises:
a multiplexer and a demultiplexer, configured to enable a transmission of the optical signals of the first number of channels over a same transmission medium.

5. A method according to claim 1, wherein, the method further comprises a step of:
determining the modulation phase offset of the first channel and the second group of channel(s) based on the metric related to bit error ratio of the respective channel.

6. A method according to claim 1, wherein,
the metric is at least one of: bit error ratio, eye opening on an eye diagram, or extinction ratio.

7. A method according to claim 1, wherein, the received optical signal in the at least one first channel further comprises a crosstalk signal-component comprising a component of the optical signal from a third group of channel(s), the third group of channel(s) comprising at least one channel that is different from the first channel and the second group of channels,
in the step of calculating, the compensated digital signal corresponding to the desired optical signal of the first channel is calculated based on the initial digital signals of the third group of channel(s) as well.

8. A method, in a far-end transmitter (102a, 102b, 102c, 102d) of an optical communication system (100), for compensating crosstalk in the optical communication system (100),
wherein, the optical communication system (100) comprises a first number of channels sharing a same optical transmission medium, each channel comprising a far-end transmitter (102a, 102b, 102c, 102d) and a corresponding receiver (103a, 103b, 103c, 103d) comprised in a receiving device (101), the first number being an integer no less than 2,
and wherein, the far-end transmitter (102a, 102b, 102c, 102d) of each channel is configured to transmit an optical signal comprising a sequence of modulated symbols at a predetermined transmission rate to the corresponding receiver (103a, 103b, 103c, 103d) in the receiving device (101);
the method comprising steps of:
receiving, an instruction from the receiving device (101) indicating a modulation phase offset for the optical signal transmitted by the far-end transmitter (102a, 102b, 102c, 102d);
adjusting, the modulation phase of the optical signal by a shift of a fraction of a symbol length according to the modulation phase offset.

9. A method, in a receiving device (201) of an optical communication system (200), for compensating crosstalk in the optical communication system (200),
wherein, the optical communication system (200) comprises a first number of channels, sharing a same optical transmission medium, each channel comprising a far-end transmitter (202a, 202b) and a corresponding receiver (203a, 203b) comprised in the receiving device (201), the first number being an integer no less than 2,
and wherein, the far-end transmitter (202a, 202b) of each channel is configured to transmit an optical signal comprising a sequence of modulated symbols at a predetermined transmission rate to the corresponding receiver (203a, 203b) in the receiving device (201),
the method comprising steps of:
receiving, at the receiver (203a, 203b) of each channel, a received optical signal comprising a desired signal component of the optical signal from the far-end transmitter (202a, 202b) of the same channel, wherein, in at least one first channel, the received optical signal further comprises a crosstalk signal component comprising a component of the optical signal from a second group of channel(s), the second group of channel(s) comprising at least one channel that is different from the first channel;
transforming, the received optical signal of each channel respectively into an electrical analog signal;
sampling, at a predetermined sampling rate, the electrical analog signal of each channel respectively based on a predetermined sampling delay (208a, 208b), to obtain an initial digital signal for each channel; the predetermined sampling delay being determined based on a metric related to bit error ratio, the predetermined sampling rate being determined as at least twice of the transmission rate of the first channel;
determining, at least for the first channel, a decimation offset, based on the metric related to bit error ratio of the first channel;
selecting, from the initial digital signal of the first channel and the second group of channel(s), respectively a decimated digital signal comprising only one sample per time interval, according to the decimation offset of the first channel, wherein, the time interval is a time duration of one symbol in the first channel;
calculating, at least for the first channel, a compensated digital signal corresponding to the desired optical signal, based on a row of the postcoder matrix and the decimated digital signals of the first channel and the second group of channels.

10. A method according to claim 9, wherein, the predetermined transmission rates of the first channel and the second group of channel(s) are the same.

11. A method according to claim 9, wherein, the predetermined transmission rate of the first channel and the second group of channel(s) being an integer multiple(s) of a base rate which is a greatest common divisor, GCD, of the transmission rates over the first channel and the second group of channel(s);
the method further comprising a step of:
transmitting an instruction to the far-end transmitters (202a, 202b) of the first channel and the second group of channel(s), indicating a modulation phase offset of the respective channel, causing the far-end transmitters (202a, 202b) of the first channel and the second group of channel(s) to adjust their modulation phase of the optical signal respectively by a shift of a fraction of a symbol length, so that the optical signals from them are modulation phase aligned with respect to the symbols when they are received.

12. A method according to claim 9, wherein,
the predetermined sampling delay is respectively determined for different channels based on the metric related to bit error ratio of the respective channel,
and in the step of sampling, the electrical analog signal of each channel is sampled respectively based on the predetermined sampling delay determined for the respective channel.

13. A receiving device (101) of an optical communication system (100), comprising a first number of receivers (103a, 103b, 103c, 103d),
wherein, the optical communication system (100) comprises the first number of channels, sharing a same optical transmission medium, each channel comprising a far-end transmitter (102a, 102b, 102c, 102d) and a corresponding receiver (103a, 103b, 103c, 103d) comprised in the receiving device (101), the first number being an integer no less than 2,
and wherein, the far-end transmitter (102a, 102b, 102c, 102d) of each channel is configured to transmit an optical signal comprising a sequence of modulated symbols at a predetermined transmission rate to the corresponding receiver (103a, 103b, 103c, 103d) in the receiving device (101),
the receiver (103a, 103b, 103c, 103d) of each channel being configured to receive a received optical signal comprising a desired signal component of the optical signal from the far-end transmitter (102a, 102b, 102c, 102d) of the same channel, wherein, in at least one first channel, the received optical signal further comprises a crosstalk signal component comprising a component of the optical signal from a second group of channel(s), the second group of channel(s) comprising at least one channel that is different from the first channel, the predetermined transmission rate of the first channel and the second group of channel(s) being an integer multiple(s) of a base rate which is a greatest common divisor, GCD, of the transmission rates over the first channel and the second group of channel(s), the receiver (103a, 103b, 103c, 103d) of each channel further being configured to transform the received optical signal of each channel respectively into an electrical analog signal;
the receiving device (101) further comprising:
a sampling module (104a, 104b, 104c, 104d) for each channel, configured to sample, at a predetermined sampling rate, the electrical analog signal of each channel respectively based on a predetermined sampling delay (108a, 108b, 108c, 108d), to obtain an initial digital signal for each channel; the predetermined sampling delay (108a, 108b, 108c, 108d) being determined based on a metric related to bit error ratio, the predetermined sampling rate being determined as a least common multiple, LCM, of the transmission rates over the first channel and the second group of channel(s);
a crosstalk compensation module (107), configured to calculate, at least for the first channel, a compensated digital signal corresponding to the desired optical signal, based on a row of a postcoder matrix and the initial digital signals of the first channel and the second group of channel(s);
the receiving device (101) further comprising:
a transmitting module for each channel, configured to transmit an instruction to the far-end transmitters (102a, 102b, 102c, 102d) of the first channel and the second group of channel(s), indicating a modulation phase offset of the respective channel, causing the far-end transmitters (102a, 102b, 102c, 102d) of the first channel and the second group of channel(s) to adjust their modulation phase of the optical signal respectively by a shift of a fraction of a symbol length, so that the optical signals from them are modulation phase aligned with respect to the symbols when they are received.

14. A far-end transmitter (102a, 102b, 102c, 102d) of an optical communication system (100),
wherein, the optical communication system (100) comprises a first number of channels sharing a same optical transmission medium, each channel comprising a far-end transmitter (102a, 102b, 102c, 102d) and a corresponding receiver (103a, 103b, 103c, 103d) comprised in a receiving device (101), the first number being an integer no less than 2,
and wherein, the far-end transmitter (102a, 102b, 102c, 102d) of each channel is configured to transmit an optical signal comprising a sequence of modulated symbols at a predetermined transmission rate to the corresponding receiver (103a, 103b, 103c, 103d) in the receiving device (101), the far-end transmitter (102a, 102b, 102c, 102d) comprising:
a receiving module, configured to receive an instruction from the receiving device (101) indicating a modulation phase offset for the optical signal transmitted by the far-end transmitter (102a, 102b, 102c, 102d);
an adjusting module, configured to adjust the modulation phase of the optical signal by a shift of a fraction of a symbol length according to the modulation phase offset.

15. A receiving device (201) of an optical communication system (200), comprising a first number of receivers (203a, 203b),
wherein, the optical communication system (200) comprises the first number of channels, sharing a same optical transmission medium, each channel comprising a far-end transmitter (202a, 202b) and a corresponding receiver (203a, 203b) comprised in the receiving device (201), the first number being an integer no less than 2,
and wherein, the far-end transmitter (202a, 202b) of each channel is configured to transmit an optical signal comprising a sequence of modulated symbols at a predetermined transmission rate to the corresponding receiver (203a, 203b) in the receiving device (201),
the receiver (203a, 203b) of each channel being configured to receive a received optical signal comprising a desired signal component of the optical signal from the far-end transmitter (202a, 202b) of the same channel, wherein, in at least one first channel, the received optical signal further comprises a crosstalk signal component comprising a component of the optical signal from a second group of channel(s), the second group of channel(s) comprising at least one channel that is different from the first channel, the receiver (203a, 203b) of each channel further being configured to transform the received optical signal of each channel respectively into an electrical analog signal;
the receiving device (201) further comprising:
a sampling module (204a, 204b) for each channel, configured to sample, at a predetermined sampling rate, the electrical analog signal of each channel respectively based on a predetermined sampling delay (208a, 208b), to obtain an initial digital signal for each channel; the predetermined sampling delay being determined based on a metric related to bit error ratio, the predetermined sampling rate being determined as at least twice of the transmission rate of the first channel;
at least one decimation offset determining module (318a, 318b, 418a, 418b) for the first channel, configured to determine a decimation offset, based on the metric related to bit error ratio of the first channel;
a decimation module (316a, 316b, 416a, 416b) for each of the first channel and the second group of channel(s), configured to select from the initial digital signal of the first channel and the second group of channel(s), respectively a decimated digital signal comprising only one sample per time interval, according to the decimation offset of the first channel, wherein, the time interval is a time duration of one symbol in the first channel;
at least one crosstalk compensation module (317a, 317b, 417a, 417b), configured to calculate a compensated digital signal corresponding to the desired optical signal for the first channel, based on a row of the postcoder matrix and the decimated digital signals of the first channel and the second group of channels.
